# EUROPEAN PATENT APPLICATION

(11) **EP 4 803 742 A1**
(43) Date of publication of application: **09.09.2026**
(21) Application number: 25382206.8
(22) Date of filing: 07.03.2025
(51) Int. Cl.: F03D 15/10, F16F 15/00, F16H 1/46, F16H 57/00, F16H 57/08, F03D 7/02, G05D 19/00

(54) **WIND TURBINE GEARBOX AND METHOD OF MOUNTING A WIND TURBINE GEARBOX**

(71) Applicant: Siemens Gamesa Renewable Energy Innovation & Technology S.L., 31621 Sarriguren (Navarra) (ES)
(72) Inventor: thor Straten, Marcel, 24361 Haby (DE); Hansen, Tomas Rosenberg, 8700 Horsens (DK); Steimle, Nils, 24361 Haby (DE); Vieira, Antonio, 4575-541 Sebolido (PT)
(74) Representative: SGRE-Association

(57) **Abstract**

The invention relates to a wind turbine gearbox (7) for transmitting torque from a rotor (4) to a generator (9) comprising at least one gearbox stage with a low speed shaft and a high speed shaft, and an adjustment means (100). According to the invention, the adjustment means (100) is arranged inside the wind turbine gearbox (7) and configured to shift a vibrational mode (M1, M2, M3) of at least one gearbox component.

## Description

The present invention relates to a wind turbine gearbox for transmitting torque from a rotor to a generator. The present invention further relates to a wind turbine comprising said wind turbine gearbox. The present invention further relates to a method of operating a wind turbine gearbox.

Wind turbines are increasingly used for the generation of electrical energy. A wind turbine typically comprises a tower and a nacelle mounted on the tower, to which a rotor is attached. The rotor is coupled to a generator. A plurality of rotor blades extends from the rotor. The blades are oriented in such a way that wind passing over the blades turns the rotor and rotates the shaft, thereby driving the generator to generate electricity.

Wind turbines are in continuous development due to advancements in technology and energy harvesting. Hence, new-generation wind turbines have increased in size compared to older ones. A modern large wind turbine is a wind turbine with a rated power output of more than 5 MW. In the majority of modern large wind turbines, a gearbox is arranged between the wind rotor and the generator to reduce the large torque on the rotor side by increasing the speed on the generator side. The wind turbine gearbox is one of the components which has greatly increased in size as the increased rotor torque and rotor power must be transmitted by the gearbox.

A larger gearbox significantly increases the weight of the wind turbine nacelle, creating a need for larger cranes being able to lift the nacelle on the tower top. In addition, a larger gearbox increases the size of the nacelle, whose dimensions are limited by the need of transport on public roads with severe limits on width and height.

For that reason, the experts in the art are constantly searching for improvements to reduce the weight and size of wind turbine gearboxes. Tremendous progress has been made in recent years in building lighter gearboxes. A lighter gearbox has the disadvantage that all the components of the gearbox are more flexible under the high loading during operation. Flexibility comes with higher vulnerability for vibrations. There are many effects bringing vibration excitation into the gearbox, like the rotor blades passing the tower shadow in the wind, excitations from wind gusts and turbulence, and of course the excitation by the gearbox components themselves like rotational frequencies of different shafts and by the gear teeth. As modern wind turbines are usually operating in a large range of variable rotor speed over the operating wind range, all these excitations are variable in frequencies and introduced energies.

As it is very difficult to build a wind turbine gearbox which is completely free of resonances over the complete operating range, there are different methods for vibration and noise reductions for wind turbine gearboxes, like redesigning single components with critical vibrational behavior, isolating vibrations with flexible couplings or elastic gearbox mountings or even adding damping devices to gearboxes for reducing the vibrations and noise emissions.

All this results in a complex and time-consuming design and optimization process for the gearbox of a modern large wind turbine.

It is therefore an object of the invention to provide an improved design of a wind turbine gearbox avoiding the disadvantages of the state of the art. It is in particular an object of the invention to simplify the gearbox design process and to accelerate the time from prototyping to serial production.

It is a further object to reduce the size and the weight of a wind turbine gearbox without increasing the vibrations and noise emissions and to improve the maintainability of a wind turbine gearbox over the lifetime of a wind turbine.

This is achieved by a wind turbine gearbox according to claim 1, a wind turbine according to claim 8 and a method of operating a wind turbine gearbox according to claim 10.

According to the invention, a wind turbine gearbox for transmitting torque from a rotor to a generator comprises at least one gearbox stage with a low speed shaft and a high speed shaft, and an adjustment means, wherein the adjustment means is arranged inside the wind turbine gearbox and configured to shift a vibrational mode of at least one gearbox component.

A modern wind turbine gearbox is a complex arrangement of a multitude of stationary and rotating parts, all together called components of the wind turbine gearbox. Arranging the adjustment means inside the gearbox means that the adjustment means is arranged inside the gearbox housing. In this way the adjustment means is an integral component of the gearbox and advantageously allows to adjust directly the behavior of a component of the wind turbine gearbox. A vibrational mode of at least one gearbox component can be a vibrational mode of just a single component, like a torsional vibration mode or a bending vibration mode of e.g. a rotating shaft. It can also be a joint vibration mode of multiple components which are vibrating in a so-called coupled vibration mode.

Shifting the vibrational mode of at least one gearbox component by an adjustment means inside the wind turbine gearbox allows advantageously to directly avoid the source of vibrations instead of dampening or reducing existing vibrations as known in the state of the art. Using adjustment means allowing to shift the vibrational mode of at least one gearbox component allows in addition for easy adaptations during the lifetime of the wind turbine gearbox. It is not unusual that a new gearbox runs smooth and silently but after a couple of years under wear, vibration level and noise emissions increase. With the ability to shift a vibrational mode using adjustment means the wind turbine gearbox can advantageously be adapted to such changes during the lifetime.

In a preferred embodiment, the adjustment means is acting on a rotating component of the wind turbine gearbox. The rotating components like shafts, planet carriers, planets, gear wheels and the like are often the components with the biggest impact on the vibrational behavior of the gearbox. As it is always more difficult to act on a rotating component than on a stationary component, changing the vibrational behavior of a rotational gearbox component during gearbox operation has not been practiced in wind turbine gearboxes. By acting with an adjustment means directly on a rotating component, the more complex adjustment means advantageously shows in practice a much higher effect in the shift of vibration modes, as the rotating parts are generally more vulnerable to vibrations than stationary parts. The difficulty of acting on a rotating component can be solved with rotating actuators or turning mechanical joints, both technologies known in other applications which can be used inside wind turbine gearboxes with some modifications.

In a preferred embodiment of the invention, the shift of the vibrational mode comprises a frequency shift of the Eigenfrequency of the vibrational mode of at least three percent, preferably more than five percent, most preferably more than eight percent. A frequency shift of more than eight percent means that an original Eigenfrequency which was e.g. situated at 10.0 Hz will be shifted to less than 9.2 Hz or to more than 10.8 Hz by the adjustment means. A frequency shift of more than three to eight percent by adjustment means is much more than what has been known in the prior art for components inside a wind turbine gearbox. Such a large shift of the Eigenfrequency allows advantageously for a significant reduction of vibrations during the operation of a wind turbine gearbox.

According to the invention, the shift of the Eigenfrequency is performed using the adjustment means to reduce the noise emitting vibrations of the wind turbine gearbox.

In a preferred embodiment of the invention, the adjustment means comprise an actuator configured to move a part of the adjustment means between a first position and a second position, both positions being spaced apart by at least 1mm. A part of the adjustment means defines that there is at least one point of the adjustment means which is moved by more than 1mm moving from the first position to the second position. By providing a real mechanical movement of the adjustment means between the first and the second position, it is advantageously assured that a mechanical device is provided which is robust enough to withstand the required 20 years lifetime under the difficult environmental conditions of a wind turbine gearbox.

In a preferred embodiment of the invention, the adjustment means is configured to adjust the vibrational length of a first gearbox shaft. Vibrational length means the length of the component which vibrates in a vibrational mode. The vibrating length of a component has big influence for the resulting frequency. The same principle is used by any musician playing a guitar when shortening the vibrating length of the vibrating strings by pressing the fingers against the frets.

Changing the vibrating length of a component advantageously provides a simple and effective method to shift the vibrational mode of the component, without needing to adjust the length of the component itself.

In a preferred embodiment of the invention, the first gearbox shaft is a sun wheel shaft of a planetary stage of the wind turbine gearbox. The sun wheel shaft of a wind turbine gearbox is an elongated shaft generally quite vulnerable to vibrations. Adjusting the vibrational length of a sun wheel shaft advantageously shifts the vibrational mode of a very noise critical component of a wind turbine gearbox.

In a preferred embodiment of the invention, the adjustment means comprises a sliding connector part adapted to be moved in axial and/or radial direction of the gearbox shaft. By providing a sliding connector part, advantageously a simple and mechanically robust solution is provided for adjusting the vibrational length of a gearbox shaft.

In a preferred embodiment of the invention, the actuator is configured to move the sliding connector part between a position free from a counter support part to a position in direct contact with the counter support part. In this way, advantageously a very robust solution is provided for adjusting the vibrational mode of a gearbox component.

Another aspect of the invention relates to a wind turbine comprising a wind turbine gearbox according to the invention and a control unit for controlling the adjustment means. A control unit for controlling the adjustment means, advantageously allows to define precise conditions under which the adjustment means adjust the vibrational mode, resulting in good results in reducing the vibrations.

In a preferred embodiment of the invention, the control unit is configured to control the adjustment means depending on a measured signal from a sensor, in particular on at least one of the parameters rotational speed, torque, power output, rotor blade angle, wind speed and/or a vibrational value. A vibrational value means a frequency, an amplitude, an acceleration or any other measurement value in direct relation to a vibration of a gearbox component. Controlling the adjustment means based on a sensor signal significantly improves the efficiency of reducing the vibrations, as the shifting of the vibrational mode can be activated only for a limited time period, in particular exactly when needed. This is especially advantageous if the shifting of a vibrational mode comes together with other mechanical disadvantages, which are not allowable for the entire lifetime of the wind turbine gearbox.

In a preferred embodiment of the invention, the control unit is configured to control the adjustment means based on threshold values. Preferably, these threshold values are adapted to the individual wind turbine and the degradation of the wind turbine during its lifetime due to wear. This allows advantageously to tune the controller for best reduction of vibrations and noise in all states of the wind turbine lifetime.

Another aspect of the invention relates to a method of operating a wind turbine gearbox, comprising the steps of operating in a first operating mode, controlling adjustment means inside the wind turbine gearbox for shifting a vibrational mode of a gearbox component, and operating in a second operating mode. The inventive method advantageously allows for shifting a vibrational mode of a gearbox component during the operation of the wind turbine gearbox, if the operational conditions are changing. This allows to perfectly adapt the vibrational behavior of the wind turbine gearbox to the requirements, by shifting from a first to a second operating mode allowing to avoid special vibrations or noise emissions which occur only under specific operational conditions.

According to a preferred embodiment of the invention, a wind turbine gearbox for transmitting torque from a rotor to a generator comprises at least one gearbox stage with a low speed shaft and a high speed shaft, and an adjustment means, wherein the adjustment means is arranged inside the wind turbine gearbox and configured to shift a vibrational mode of at least one gearbox component.

A modern wind turbine gearbox is a complex arrangement of a multitude of stationary and rotating parts, all together called components of the wind turbine gearbox. Arranging the adjustment means inside the gearbox means that the adjustment means is arranged inside the gearbox housing. In this way the adjustment means is an integral component of the gearbox and allows advantageously to adjust directly the behavior of a component of the wind turbine gearbox. A vibrational mode of at least one gearbox component can be a vibrational mode of just a single component, like a torsional vibration mode or a bending vibration mode of e.g. a rotating shaft. It can also be a joint vibration mode of multiple components which are vibrating in a so-called coupled vibration mode.

Shifting the vibrational mode of at least one gearbox component by an adjustment means inside the wind turbine gearbox allows advantageously to directly avoid the source of vibrations instead of dampening or reducing existing vibrations as known in the state of the art. Using adjustment means allowing to shift the vibrational mode of at least one gearbox component allows in addition for easy adaptations during the lifetime of the wind turbine gearbox. It is not unusual that a new gearbox runs smooth and silently but after a couple of years under wear, vibration level and noise emissions increase. With the ability to shift a vibrational mode using adjustment means the wind turbine gearbox can advantageously be adapted to such changings during the lifetime.

In a preferred embodiment of the invention the step of operating in a second operating mode is executed only for a predefined limited time period. As described above, controlling adjustment means inside the wind turbine gearbox for shifting a vibrational mode of a gearbox component might result in mechanical disadvantages for the gearbox, which are only allowable for a limited time period. So, executing the second operating mode only for a predefined limited time period advantageously avoids a significant reduction of the lifetime of the wind turbine gearbox.

In a preferred embodiment of the invention the step of controlling adjustment means shifts the Eigenfrequency of the vibrational mode by at least three percent, preferably more than five percent, most preferred more than eight percent. Such a large shift of the Eigenfrequency allows advantageously for a significant reduction of vibrations during the operation of a wind turbine gearbox.

In a preferred embodiment of the invention the step of controlling adjustment means comprises moving a part of the adjustment means between a first position and a second position, both positions being spaced apart by at least 1mm. By providing a real mechanical movement of the adjustment means between the first and the second position, it is advantageously assured that a mechanical device is provided which is robust enough to withstand the required 20 years lifetime under the difficult environmental conditions inside a wind turbine gearbox.

In a preferred embodiment of the invention the step of controlling adjustment means comprises adjusting the vibrational length of a gearbox shaft between a first vibrational length and a second vibrational length. As explained above, changing the vibrating length of a component advantageously provides a simple and effective method to shift the vibrational mode of the component, without needing to adjust the length of the component itself.

In a preferred embodiment of the invention adjusting the vibrational length comprises the step of moving a sliding connector in axial and/or radial direction of the gearbox shaft. In this way, advantageously a very robust solution is provided for adjusting the vibrational mode of a gearbox component.

In a preferred embodiment of the invention the step of controlling adjustment means comprises measuring at least one of the parameters rotational speed, torque, power output, rotor blade angle, wind speed and/or a vibrational value and controlling the adjustment means depending on the measured parameter value. As explained above, controlling the adjustment means based on a sensor signal significantly improves the efficiency of reducing the vibrations, as the shifting of the vibrational mode can be activated exactly when needed.

In order to facilitate the understanding of the characteristics of the invention and being an integral part of this specification, some drawing sheets are attached on which figures, with an illustrative but not limiting character, the following is represented:
Figure 1 shows a wind turbine with a wind turbine gearbox for transmitting torque from a wind rotor to a generator according to the invention.
Figure 2 shows a planet stage of a wind turbine gearbox as known in the prior art.
Figure 3 shows a noise risk diagram of a gearbox for a wind turbine as known in the prior art.
Figure 4 shows a noise risk diagram of a gearbox for a wind turbine according to the invention.
Figure 5 shows a gearbox according to a first embodiment of the invention.
Figure 6 shows a gearbox according to another embodiment of the invention in a first operation mode.
Figure 7 shows the gearbox of Figure 6 in a second operation mode.

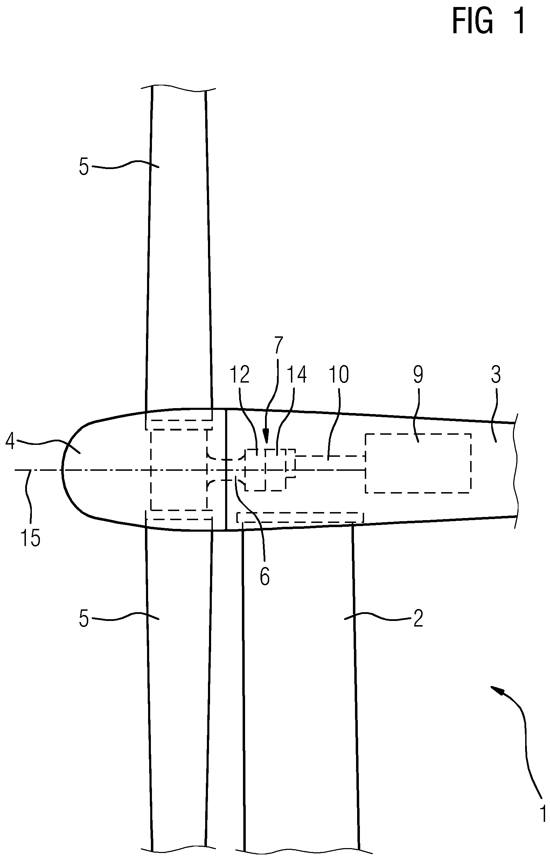

Figure 1 shows a wind turbine 1 with a tower 2 and a nacelle 3. Rotatably attached to the nacelle 3 is a wind rotor 4 with rotor blades 5. The torque generated by the rotor 4 is transmitted via the rotor shaft 6 to the gearbox 7 comprising a planet stage 12 and a spur gear stage 14. In the shown embodiment, the rotor shaft 6 is the input shaft 19 for the planet stage 12. The gearbox axis 15 is at the same time the rotor axis. The whole nacelle 3 is inclined or tilted several degrees against the horizontal plane to prevent the rotor blades 5 hitting the tower in strong winds. The output torque of the gearbox 7 is transmitted via the output shaft 10 to the generator 9 to produce electricity.

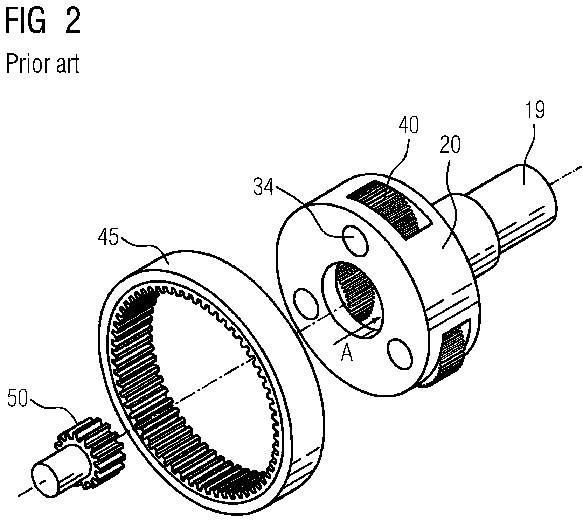

Figure 2 shows a planet stage 12 as known in the prior art. An input shaft 19 transmits torque to a planet carrier 20. Attached to the planet carrier 20 are planet shafts 34, on which planet wheels 40 are rotatably mounted. In the shown embodiment, three planet shafts 34 and three planet wheels 40 are connected to the planet carrier 20. For operation, the hollow wheel 45 is arranged around the planet carrier 20, which results in the planets 40 meshing with the hollow wheel 45. The sun wheel 50 is positioned at the center of the planet carrier 20 in such a way that the planet wheels 40 mesh with the sun wheel 50. In some embodiments, the sun wheel 50 is connected to the output shaft 10, in other embodiments, the sun wheel 50 is connected to a different shaft, e.g., an intermediate shaft 60.

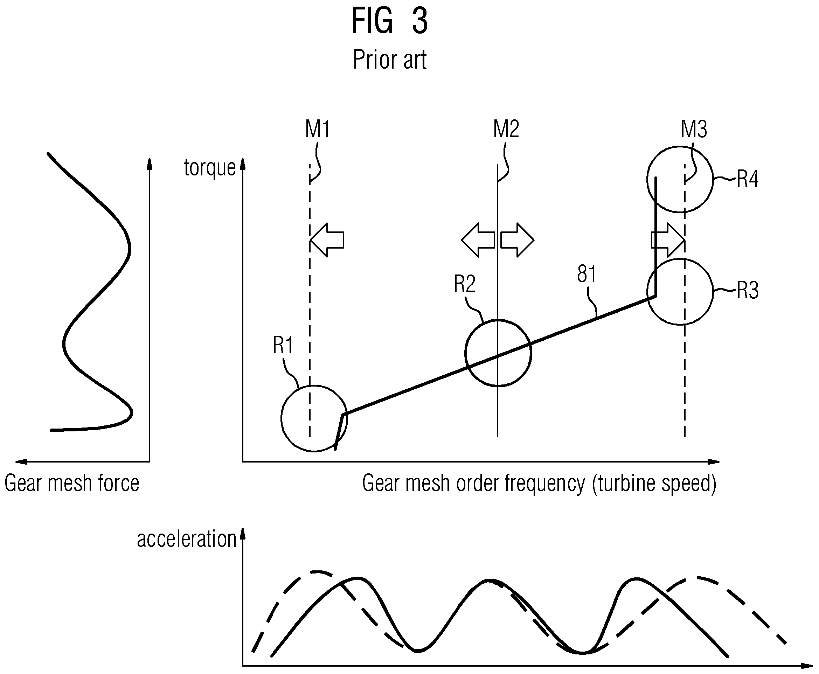

Figure 3 shows a noise risk diagram of a wind turbine gearbox 7 as known in the prior art. In the center part, figure 3 shows a torque speed diagram as used in many known wind turbines 1. As wind turbines 1 usually use a wind turbine gearbox 7 with constant gear ratio, the gear mesh frequencies are directly proportional to the turbine rotational speed. Usually, modern wind turbines 1 are controlled with a preset torque speed schedule as indicated by the line 81. As an example, three vibrational modes M1, M2, M3 of the wind turbine gearbox 7 are indicated as vertical lines. If an excitation frequency (e.g. blade frequency, shaft rotation frequency, gear mesh frequency or a full multiple thereof) hits a vibrational mode M1, M2, M3 a vibrational risk area R1, R2, R3, R4 results. Risk areas on both edges of the speed range might be mitigated by either cutting the speed range which means limiting the allowed minimum speed and maximum speed of the turbine as shown in the vertical or almost vertical ranges of the torque speed schedule 81, or by shifting the vibrational modes M1, M2, M3 further out of the speed range as indicated by the large arrows. Shifting the vibrational mode M2 out of the speed range requires major design changes or might even be impossible due to the given design constraints in a wind turbine gearbox 7.

In the lower part of Figure 3, acceleration at one specific point in the gearbox is shown as an example for the vibrational energy in the wind turbine gearbox 7. In the area of the vibrational modes M1, M2, M3 the acceleration and thus the vibration is highest. By shifting the vibrational modes M1 and M3 out of the operational speed range, or by cutting the operational speed range in the upper and lower limits, it is possible to shift the highest acceleration levels out of the operating range, as shown in the dotted line.

In the left part of Figure 3, gear mesh force (teeth force) is shown over torque. Due to the geometrical shaping of the teeth, which is only optimized for one operation point, it is not a monotonous function. As there are maxima in the gear mesh force at different torque levels, there are two risk areas R3 and R4 at the same frequency or the same turbine speed in the upper operating range (right side of the center diagram).

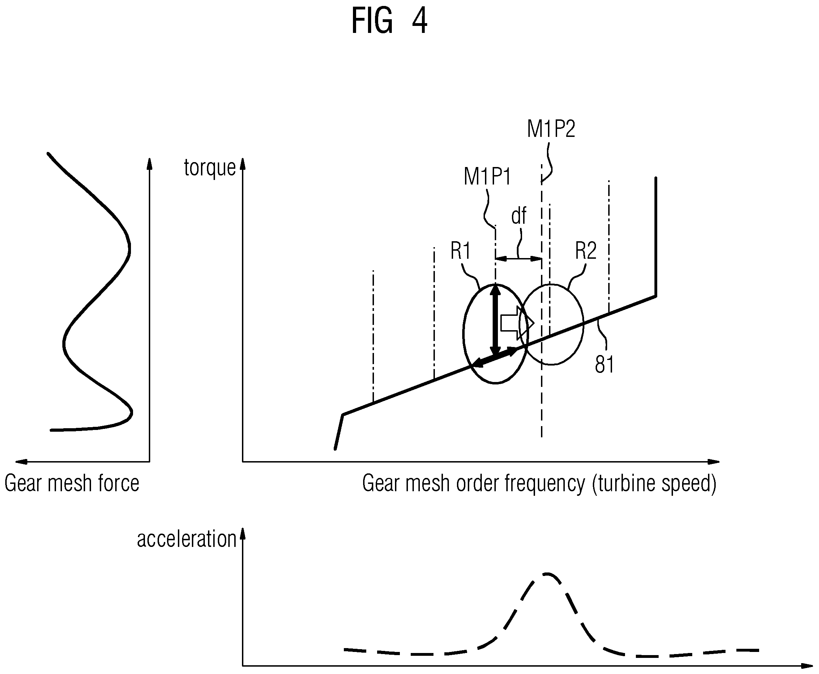

Figure 4 shows a noise risk diagram of a wind turbine gearbox 7 according to the invention, based on the diagrams shown in Figure 3. According to the invention, the vibrational mode M1 of at least one gearbox component can be shifted from a position M1P1 to a second position M1P2, as shown in the Figure 4. The shift of the vibrational mode M1 comprises a frequency shift df from the first position M1P1 to the second position M1P2 of at least three percent, most preferable more than eight percent. If the wind turbine gearbox 7 is operated at a turbine speed near the left position M1P1 of the vibrational mode M1, the vibrational mode M1 will be shifted using the adjustment means 100 from a first operating mode M1P1 to a second operating mode M1P2 at the right side of the diagram. So, the high vibrational risk area R1 of a state of the art wind turbine gearbox 7 is shifted to the right side to the vibrational risk area R2. As the acceleration maximum will also be shifted to the right side as shown in the dotted line in the lower part of Figure 4, operation the wind turbine gearbox 7 with a turbine speed corresponding to the frequency M1P1 will result in a moderate level of acceleration and thus a low vibration and noise level. If the wind turbine gearbox 7 needs to be operated in a turbine speed corresponding to the position M1P2 of the vibration mode M1, the vibration mode M1 will be shifted back to the first operation mode M1P1 on the left side, resulting in a similar low level of acceleration and vibration as shown in Figure 4. So, starting from a first operating mode M1P1 and the need to operate the wind turbine gearbox with a turbine speed corresponding to the frequency M1P1, the adjustment means 100 inside the wind turbine gearbox 7 will be controlled to shift the vibrational mode M1 from the first position M1P1 to the second position M1P2, thus operating the wind turbine gearbox 7 in a second operation mode M1P2.

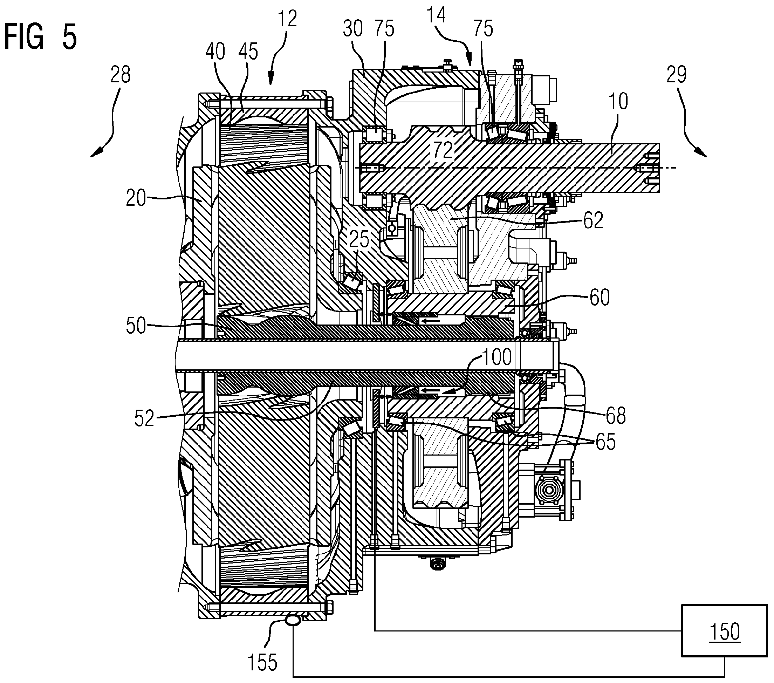

Figure 5 shows two stages of a wind turbine gearbox 7 according to the invention. The wind turbine gearbox 7 comprises a planet stage 12 and a spur gear stage 14. In usual embodiments, wind turbine gearboxes 7 comprise one to four planet stages 12 and zero to three spur gear stages 14. The output shaft 10 is arranged on the generator side 29 of the wind turbine gearbox 7. In the shown embodiment, the planet stage 12 might be connected to a wind rotor 4 or to another planet stage 12 at the rotor side 28 of the wind turbine gearbox 7. The planet stage 12 comprises a planet carrier 20 comprising at least three planet wheels 40. The planet carrier 20 is supported by at least one planet carrier bearing 25. The planet wheels 40 are meshing with a hollow wheel 45 and a sun wheel 50. The hollow wheel 45 forms part of the gearbox housing 30. The spur gear stage 14 is connected to the planet stage 12 via the sun wheel shaft 52. The sun wheel shaft 52 is connected via an intermediate shaft teeth coupling 68 to the intermediate shaft 60. The intermediate shaft 60 is supported by intermediate shaft bearings 65 and supports an intermediate gear 62 which meshes with the high speed gear 72. The high speed gear 72 is joint with the output shaft 10 which is supported by output shaft bearings 75 in the gearbox housing 30. For the spur gear stage 14, the intermediate shaft 60 represents the low speed shaft and the output shaft 10 represents the high speed shaft. For the planet stage 12, the planet carrier 20 or a shaft connected thereto represents the low speed shaft and the sun wheel shaft 52 represents the high speed shaft.

In the shown embodiment, adjustment means 100 comprising multiple parts are arranged inside the wind turbine gearbox 7, or differently said inside the gearbox housing 30. These adjustment means 100 are configured to shift a vibrational mode M1, M2, M3 of at least one gearbox component. In the shown embodiment, the at least one gearbox component is the sun wheel shaft 52.

Furthermore, a control unit 150 is shown in figure 5. The control unit 150 is connected to the adjustment means 100. In addition, the control unit 150 is connected to a sensor 155. The sensor might be configured to measure a vibrational value like a frequency, an amplitude, an acceleration or any other measurement value in direct relation to a vibration of a gearbox component. In other embodiments, the sensor 155 is a single sensor 155 or a set of sensors 155 measuring at least one of the parameters rotational speed, torque, power output rotor blade angle or wind speed. The sensor 155 might be positioned at any location of the wind turbine 1 allowing to measure one of the above-mentioned parameters advantageously.

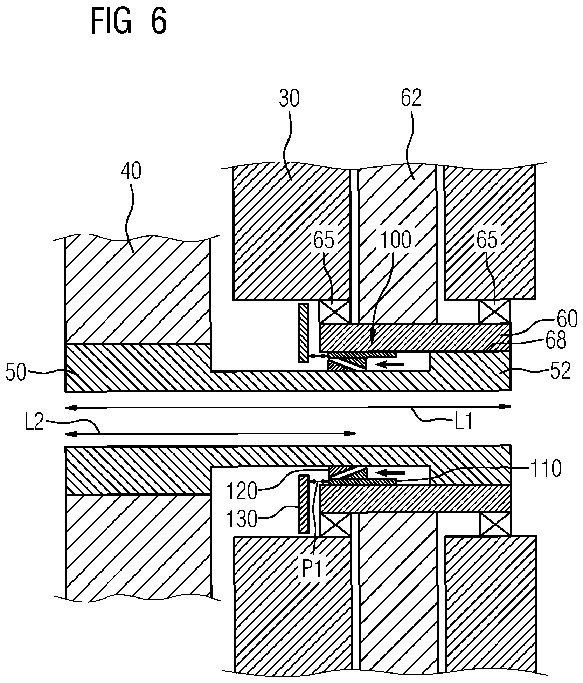

Figure 6 shows another embodiment of an inventive wind turbine gearbox 7 in an enlarged, but schematic view. As shown in figure 5, the sun wheel shaft 52 is connected to an intermediate shaft 60 via an intermediate shaft teeth coupling 68. Adjustment means 100 comprising a sliding connector part 110 and a counter support part 120 are arranged between the sun wheel shaft 52 and the intermediate shaft 60. In figure 6, the sliding connector part 110 is shown in a first position P1, the sliding connector part 110 being free of the counter support part 120 or differently said not in contact with the counter support part 120. In the shown position P1, the sun wheel shaft 52 is unsupported between the sun wheel 50 and the intermediate shaft teeth coupling 68. Therefore, the vibrational length L1 is the complete length of the sun wheel shaft 52. The adjustment means 100 comprises in addition an actuator 130 configured to move a part of the adjustment means 100, in the shown embodiment the sliding connector part 110, between this first position P1 and a second position P2 indicated by the arrows pointing to the left side. In the shown embodiment, the sliding connector part 110 is configured to be moved in an axial direction of the sun wheel shaft 52. In other embodiments, the sliding connector part 110 might be moved in radial direction of the sun wheel shaft 52, or in a combination of a radial and axial direction.

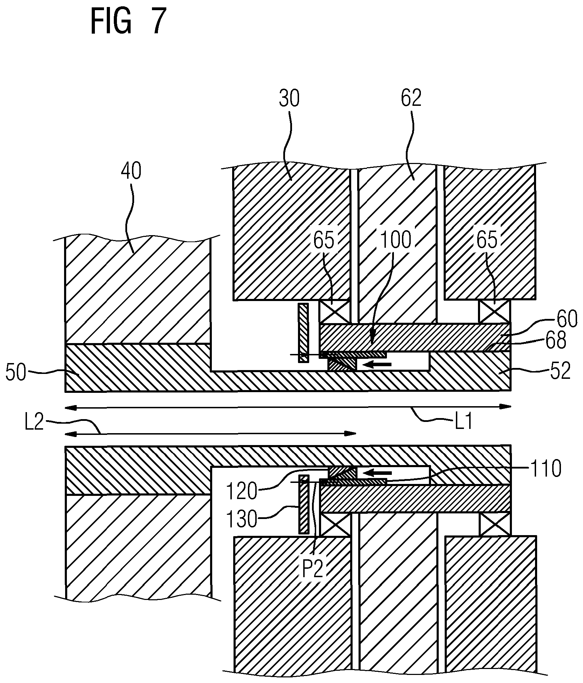

In Figure 7, the same embodiment of the inventive wind turbine gearbox 7 is shown, but with the sliding connector part 110 in the second position P2. The first position P1 and the second position P2 are spaced apart by at least 1mm, rendering the mechanical device robust enough to withstand the hi vibrational environment of a wind turbine gearbox 7. In the second position P2, the sliding connector part 110 is in direct contact with the counter support part 120. Due to the contact between the sliding connector part 110 and the counter support part 120, the vibrational length of the sun wheel shaft 52 is shortened to the length L2. Preferably, the sliding connector part is only adjusted in the second position P2 when needed. As the sun wheel 50 is able to compensate for asymmetric loads by radial movements, such radial movements are somewhat limited if the sliding connector part 110 is in direct connection with the counter support part 120. This would be a disadvantage if applied for the whole lifetime of the wind turbine 1, what for limited time which means only when needed for vibration reduction, it is perfectly admittable.

In the shown embodiments, the actuator 130 is only configured to move the sliding connector part 110 either in the first position P1 or in the second position P2, thus switching the vibrational length of the sun wheel shaft 52 from L1 to L2. In other embodiments, the adjustment means 100 are configured to continuously vary the vibrational length L1, L2. Departing from the shown embodiment, this can easily be achieved if the actuator 100 is configured to move both, the sliding connector part 110 as well as the counter support part 120 in the axial direction of the sun wheel shaft 52. In such a configuration, the vibrational length L1, L2 can be continuously varied between L1 and L2.

In another embodiment, the adjustment means are configured to allow at least one intermediate position between the vibration length L1 and vibrational length L2. This might be achieved by allowing to move the counter support part 120 in two positions and the sliding connector part 110 in three positions. Such an arrangement is advantageous as it is much simpler to design and control as the more complex continuous variation of the vibrational length L1, L2.

### Reference list

- 1: Wind Turbine
- 2: Tower
- 3: Nacelle
- 4: Rotor
- 5: Rotor Blade
- 6: Rotor Shaft
- 7: Gearbox
- 9: Generator
- 10: Output shaft
- 12: Planet Stage
- 14: Spur Gear Stage
- 15: Gearbox Axis
- 19: Input Shaft
- 20: Planet Carrier
- 25: Planet Carrier Bearing
- 28: Rotor Side
- 29: Generator Side
- 30: Gearbox Housing
- 34: Planet Shaft
- 40: Planet Wheel
- 45: Hollow Wheel
- 50: Sun Wheel
- 52: Sun Wheel shaft
- 60: Intermediate Shaft
- 62: Intermediate Gear
- 65: Intermediate Shaft Bearings
- 68: Intermediate Shaft Teeth Coupling
- 72: High Speed Gear
- 75: Output shaft Bearing
- 100: Adjustment Means
- 110: Sliding Connector Part
- 120: Counter Support Part
- 130: Actuator
- 150: Control Unit
- 155: Sensor
- L1: Vibrational Length P1
- L2: Vibrational Length P2
- M1: Mode 1
- M2: Mode 2
- M3: Mode 3
- M1P1: Mode 1 Position 1
- M1P2: Mode 1 Position 2

## Claims

1. A wind turbine gearbox (7) for transmitting torque from a rotor (4) to a generator (9) comprising at least one gearbox stage with a low speed shaft and a high speed shaft, and an adjustment means (100), wherein the adjustment means (100) is arranged inside the wind turbine gearbox (7) and configured to shift a vibrational mode (M1, M2, M3) of at least one gearbox component.

2. The wind turbine gearbox (7) according to the preceding claim, wherein the adjustment means (100) comprises an actuator (130) configured to move a part of the adjustment means (100) between a first position (P1) and a second position (P2), both positions (P1, P2) being spaced apart by at least 1mm.

3. The wind turbine gearbox (7) according to the preceding claim, wherein the adjustment means (100) comprises a sliding connector part (110) adapted to be moved in axial and/or radial direction of the gearbox shaft.

4. The wind turbine gearbox (7) according to the previous claim wherein the actuator (130) is configured to move the sliding connector part between a position free from a counter support part (120) to a position in contact with the counter support part (120).

5. The wind turbine gearbox (7) according to any of the preceding claims, wherein the shift of the vibrational mode (M1, M2, M3) comprises a frequency shift (df) of the Eigenfrequency of the vibrational mode of at least three percent, preferably more than five percent, most preferably more than eight percent.

6. The wind turbine gearbox (7) according to any of the preceding claims, wherein the adjustment means (100) is configured to adjust the vibrational length (L1, L2) of a first gearbox shaft.

7. The wind turbine gearbox (7) according to the previous claim, wherein the first gearbox shaft is a sun wheel shaft (52) of a planetary stage (12) of the wind turbine gearbox (7).

8. A wind turbine (1) comprising a wind turbine gearbox (7) according to any of the preceding claims and a control unit (150) for controlling the adjustment means (100).

9. The wind turbine (1) according to the preceding claim, wherein the control unit (150) is configured to control the adjustment means (100) depending on a measured signal from a sensor (155), in particular on at least one of the parameters rotational speed, torque, power output, rotor blade angle, wind speed and/or a vibrational value.

10. A method of operating a wind turbine gearbox (7), in particular according to one of the claims 1 to 7, comprising the steps of:
- operating in a first operating mode (M1P1),
- controlling adjustment means (100) inside the wind turbine gearbox (7) for shifting a vibrational mode (M1, M2, M3) of a gearbox component, and
- operating in a second operating mode (M1P2).

11. The method of operating a wind turbine gearbox (7) according to the preceding claim, wherein the step of controlling adjustment means (100) shifts the Eigenfrequency of the vibrational mode (M1, M2, M3) by at least three percent, preferably more than five percent, most preferred more than eight percent.

12. The method of operating a wind turbine gearbox (7) according to claim 10 or 11, wherein the step of controlling adjustment means (100) comprises moving a part of the adjustment means (100) between a first position (P1) and a second position (P2), both positions (P1, P2) being spaced apart by at least 1mm.

13. The method of operating a wind turbine gearbox (7) according to claims 10 to 12, wherein the step of controlling adjustment means (100) comprises adjusting the vibrational length (L1, L2) of a gearbox shaft between a first vibrational length (L1) and a second vibrational length (L2).

14. The method of operating a wind turbine gearbox (7) according to the preceding claim, wherein adjusting the vibrational length (L1, L2) comprises the step of moving a sliding connector (110) in axial and/or radial direction of the gearbox shaft.

15. The method of operating a wind turbine gearbox (7) according to the claims 10 to 14, wherein controlling adjustment means comprises measuring at least one of the parameters rotational speed, torque, power output, rotor blade angle, wind speed and/or a vibrational value and controlling the adjustment means depending on the measured parameter value.
